Europäisches Patentamt

(19) European Patent Office

Office européen des brevets

(11) EP 0 890 720 A1

(12) EUROPEAN PATENT APPLICATION

(43) Date of publication:
13.01.1999 Bulletin 1999/02

(51) Int. Cl.⁶: F02B 43/00, F02M 21/02

(21) Application number: 97111483.0

(22) Date of filing: 07.07.1997

(84) Designated Contracting States:
AT BE CH DE DK ES FI FR GB GR IE IT LI LU MC NL PT SE
Designated Extension States:
AL LT LV SI

(71) Applicant:
Seima Elettronica S.r.l.
33028 Tolmezzo (Udine) (IT)

(72) Inventors:
• Bertossi, Bruno, Ing.
33013 Gemona del Friuli (Udine) (IT)
• Vezzil, Stefano
33028 Tolmezzo (Udine) (IT)

(74) Representative: Rinaldi, Carlo
c.o. Studio Brevetti Nazionali ed Esteri
dell'Ing. Carlo Rinaldi & C. s.d.f.
Piazza di Porta Castiglione, 16
40136 Bologna (IT)

(54) **Modulating device for feeding internal combustion engines with L.P.G. or methane and method for controlling the device**

(57) A modulating device for feeding internal combustion engines with l.p.g. or methane consists of a hollow box (15,37) divided into two inlet cavities (18,19) and an outlet cavity (20); the hollow box (15,37) presents two inlets (16,17) connecting the inlet cavities (18,19) to the pressure reducer (2) and an outlet (21) connecting the cavity (20) to a suction duct of the engine (1); a shutter (24,25) varies the flow rate of the fuel crossing a passage opening (22,23) located between the inlet cavities (18,19) and the outlet cavity (20); the shutter (24,25) is connected to an electromechanical apparatus (31,35) by means of a rod (29); the electromechanical apparatus (31,35) transmits an oscillating movement to the shutter (24,25,36), the oscillating movement having an amplitude and a frequency depending on the engine operating condition measured by sensors (11,34) capable of sensing said operating condition.

Fig.2

EP 0 890 720 A1

**Description**

BACKGROUND OF THE INVENTION

The present invention relates to a device capable of modulating the continuous flow rate of a gaseous fuel (l.p.g. or methane) which feeds an internal combustion engine; the device metering the fuel during idling, low, middle, high and full load.

In addition, the invention refers to the method for controlling the device; by means of this method, it is possible to maintain the modulating of the device at a preestablished constant revolution speed, apart from the age of the vehicle acted by an engine in which the device is installed.

STATE OF THE TECHNIQUE

EP-A-0 563 223 refers to an equipment metering a gaseous fuel, then equipment being fitted with an injection valve for each intake pipe.

Each injection valve presents a seat and a disc interacting therewith; the disc comprises a diaphragm which rests against the seat when unloaded. The atmospheric pressure, the value of which depends on the altitude and other known causes, acts on a side of the diaphragm; therefore, the process of carburation depends on these causes in an uncontrolled way.

Substantially, the equipment described in EP-A-0 563 223 presents the following disadvantages:

A- During any engine operating condition the fluids in a cavity connected to the cylinders by means of separate apertures are subjected to pulsations owing to the alternating strokes of the thermodynamic and mechanic cycle of the engine; these pulsations alter the flow rate and the composition of the mixture feeding the engine combustion chambers;

B- The diaphragm located in the body of the valve rests against the seat when unloaded. The side of the diaphragm not loaded by the fuel pressure is connected to the atmosphere, the pressure of which depends on the altitude and other known causes.

AIM OF THE INVENTION

The purpose of this invention is to remedy these defects. The invention, as claimed, solves the problem of creating a modulating device for feeding internal combustion engines with a gaseous fuel (l.p.g. or methane); by using the device it is possible to obtain a correct process of carburation in each operating condition of the engine.

In addition, the invention relates to a method for controlling the device; the aim of this method is to maintain the automatic metering of the device at an established reference revolution speed throughout the age of the vehicle.

The device according to the present invention comprises a hollow box, the internal part of which is divided into at least one inlet cavity and one outlet cavity; the hollow box presents at least one inlet connecting the inlet cavity to a pressure reducer and one outlet which connects the outlet cavity to at least one intake pipe of the engine; in addition, the device presents a shutter capable of changing the flow rate of the fuel crossing a passage opening located between the inlet cavity and the outlet cavity; the shutter being connected to an electromechanical apparatus by means of connecting elements; in order to control the fuel flow rate through the passage opening according to the operating condition of the engine, a central control unit is provided acting on the electromechanical apparatus for transmitting an oscillating movement to the shutter, the oscillating movement having an amplitude and a frequency depending on the engine operating condition measured by sensors capable of sensing said operating condition.

The shutter consists of two different parts: a first part controlling a first passage opening and a second part controlling a second passage opening; the first passage opening connects a first cavity to an intermediate cavity, while the second passage opening connects a second cavity to the intermediate cavity; the first part of the shutter is integral with a first rod and the second part is integral with a second rod; a first spring stresses the first part of the shutter to allow its return to the closing position of the first passage opening when the second part moves to the closing position of the second passage opening, while a second spring rests against the second part.

BRIEF DESCRIPTION OF THE DRAWINGS

Other advantages, features and aims of the invention will be better understood by referring to the attached drawings which concern preferred embodiments of the device, in which:

Fig.1 represents schematically an engine fed by the device according to the present invention;
Fig.2 shows a first embodiment of the device according to the present invention with the regulating means of the flow rate of the gaseous fuel in a first position;
Fig.3 illustrates the device of Fig.2 with the regulating means of the flow rate in a second position;
Fig.4 shows the device of Fig.2 with the regulating means of the flow rate in a third position;
Fig.5 shows a second embodiment of the device consisting of a single element capable of acting like the shutting device shown in Figs 2, 3, 4; and
Fig.6 is a flow chart explaining the method for controlling the device.

DESCRIPTION OF PREFERRED EMBODIMENTS OF THE INVENTION

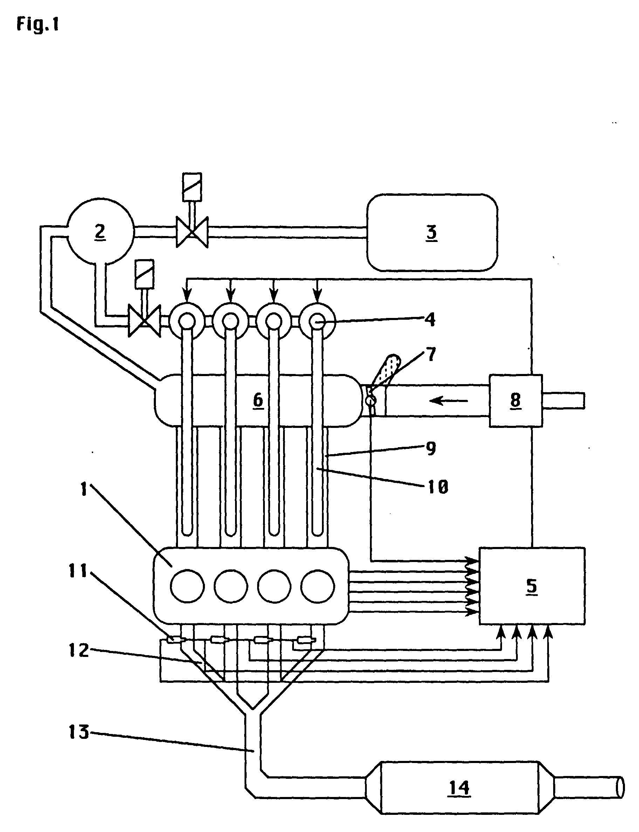

The engine 1 of Fig.1 is fed by a gaseous fuel coming from a pressure reducer 2 connected to a tank 3; the gaseous fuel being metered by devices 4 according to the present invention, which are electrically connected to a central control unit 5 capable of moving the regulating means of the flow rate of the gaseous fuel taking into account the operating condition of the engine 1.

An intake manifold 6 is fitted with a body housing a throttle valve 7; the intake manifold 6 being connected to a filter 8 for the air sucked by the combustion chambers; an accelerator tie rod is used for manoeuvring the throttle 7; in addition, the apparatus comprises a cooling system, a feeding system for a liquid fuel and other movements or mechanic elements (not represented) which are usually installed in common internal combustion engines for motor vehicles.

Each device 4 presents an inlet connected to the pressure reducer 2 and an outlet connected to its own intake pipe 9 through a connecting line 10.

Oxygen sensors 11 are inserted in the exhaust pipes 12 of each combustion chamber of the engine 1; other sensors measure the operating condition of the engine 1 which has to be controlled for obtaining a correct carburation process, said sensors being electrically connected to the central control unit 5.

The exhaust pipes 12 flow into an exhaust manifold 13 fitted with a catalytic muffler 14.

In another embodiment only one oxygen sensor 11 (lambda sensor) is inserted in the exhaust manifold 13.

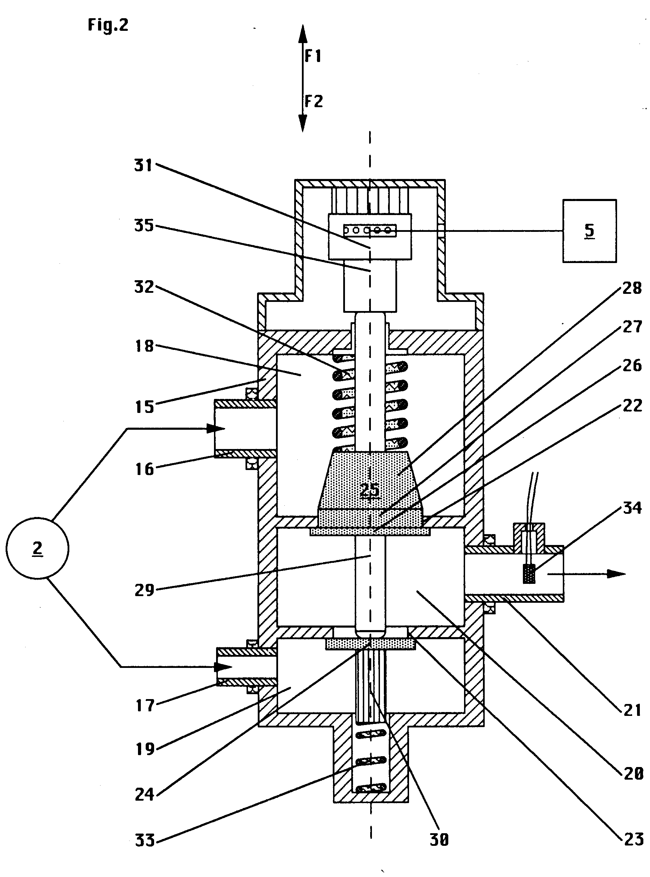

The device shown in Fig.2 consists of a hollow box 15 connected to the pressure reducer 2 by means of two inlet tubes 16 and 17; the first tube 16 flows into a first cavity 18, while the second tube 17 flows into a second cavity 19.

A third cavity 20, located between the first cavity 18 and the second cavity 19, is connected to its the own intake pipe 9 by means of a tube 21. A first passage opening 22 connects the cavity 18 to the intermediate cavity 20 and a second passage opening 23 connects the cavity 19 to the, intermediate cavity 20. A first shutter 24 controls the first passage opening 22, while a second shutter 25 controls the second passage opening 23.

Advantageously, the first shutter 24 is shaped like a plate, while the second shutter 25 consists of a plate 26, a cylindrical part 27 and a part shaped like a truncated cone 28.

A connecting rod 29 is integral with the shutter 25 for pushing the shutter 24 downwards. This plate-shutter 24 is integral with a rod 30 and is maintained in contact with the rod 29 by means of a spring 33 which pushes the rod 30 upwards.

A step motor 31 receives control signals from the central control unit 5, to which it is electrically connected, in order to move the rod 29 in the directions of the arrows $F_1$, $F_2$.

The first spring 32 Pushes the shutter 25, while the second spring 33 stresses the rod 30 integral with the plate-shutter 24, to allow a quick return when the rod 29 is retracted.

The rod 30, the plate-shutter 24 and the spring 33 form an elastic system with a low coefficient of friction; this system elastically reacts to the alternating stresses of the rod 29; therefore, the movements of the elastic system have the same frequency and proportional amplitude as movements of the rod 29 and are phased with the same movements.

A resistor 34 is inserted in the tube 21, said resistor 34 being electrically connected to the central control unit 5 for obtaining the function which will be better explained as follows.

The central control unit 5 defines the frequency and amplitude of the alternating rotating movements of the step motor 31 according to the operating condition of the engine 1 measured by said sensors; the reduction gear 35 changes the rotating movements of the step motor 31 into alternating translations of the rod 29 in the directions $F_1$, $F_2$; in preselected operating phases of the engine 1, said, translations follow a sinusoidal law.

When the engine 1 is not in function or runs in cut-off condition, both shutters 24, 25 close the respective passage openings 22, 23 so that the gaseous fuel is not sent to the combustion chambers.

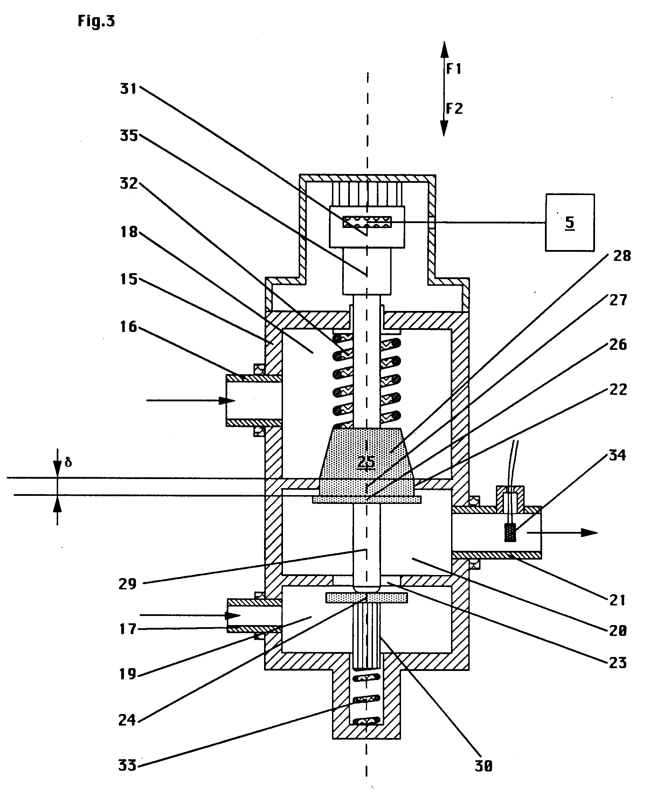

When the engine 1 is idling or low loaded, both shutters 24, 25 move from the position of Fig.2 to the position of Fig.3 and vice-versa, so that the gaseous fuel passes only through the passage opening 23. For this purpose the height $\partial$ of the cylindrical part 26 of the shutter 25 is chosen so that the passage opening 22 is closed by the shutter 25 during the idling phases and with low loaded engine.

During these phases, the flow rate of the gaseous fuel is defined by the distance of the plate-shutter 24 from the passage opening 23 and by the frequency of the alternating translations of the rod 29, the amplitude of which in the directions $F_1$, $F_2$ is lower than the height $\partial$, the amplitude being delimited by the alternating rotations of the step motor 31 The amplitude and frequency of the alternating rotations of the step motor 31 are defined by the central control unit 5 according to the operating condition of the engine 1.

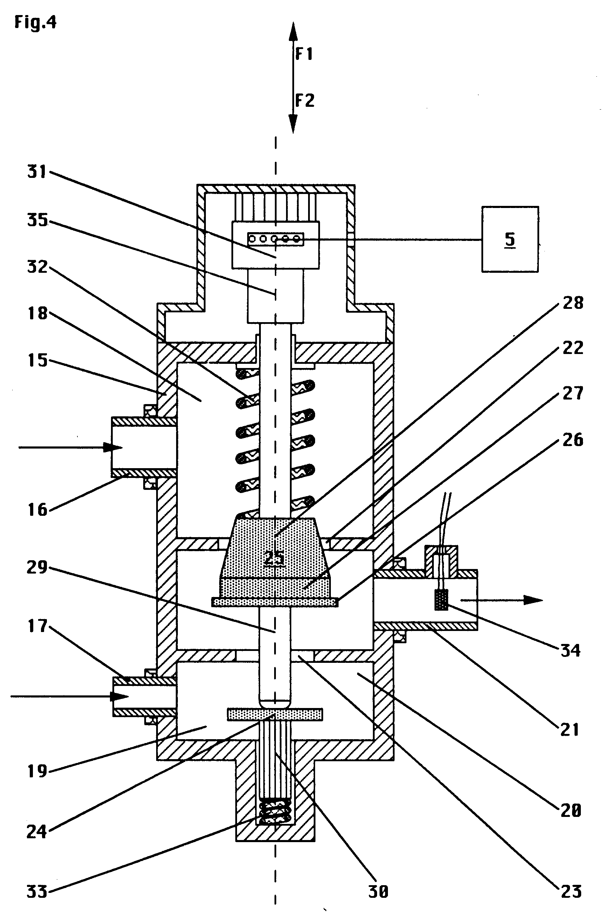

During middle, high and full load phases the flow rate of the gaseous fuel defined by the distance of the plate-shutter 24 from the passage opening 23 is not sufficient for feeding the engine 1 and, in addition, the measure of the gaseous fuel flow rate is not reliable; therefore, in these phases, the flow rate of the gaseous fuel to be sent to the engine 1 is defined by the truncated cone part 28 of the shutter 25; in fact, the area of the section through the opening 23 depends on the axial position of said part 28, said area increasing with the increasing of downwards excursion of the rod 29. Therefore, during these phases, the shutter 25 is found between the positions of Figs.3, 4.

In a not shown embodiment, the modulating device presents two openings each connected to its own suction duct; therefore, this modulating device feeds two combustion chambers, while the previously described and illustrated device feeds only one combustion chamber.

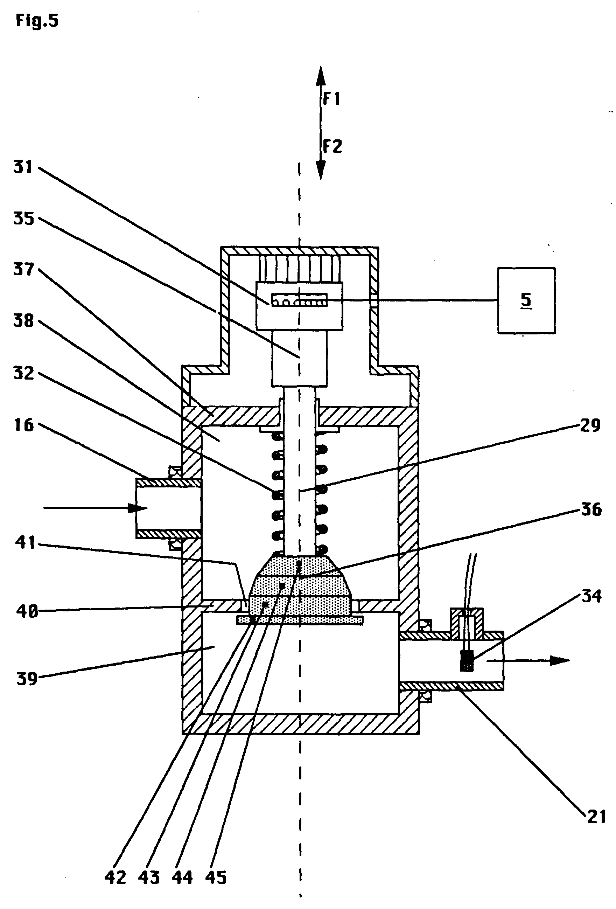

The device shown in Fig.5 differs from the previous one in that a single shutter 36 is provided for defining the flow rate of the gaseous fuel during tile various operating phases of the engine 1. A box 37 is divided into two cavities 38, 39 by means of a separating wall 40, in which a passage opening 41 is made; the first cavity 38 is connected to the pressure reducer 2 by means of a tube 16, while the second cavity 39 is connected to its own intake pipe 9 by means of a tube 21. The shutter 36 controlling the passage opening 41 consists of four superimposed parts: a first lower part 42 shaped like a plate is used to close the passage opening 41 between the two cavities 38, 39; a second cylindrical part 43 has a shorter diameter than the diameter of the passage opening 41; a third part 44 shaped like a truncated cone presents a basis integral with the upper side of the second cylindrical part 43 and has a first lateral surface with a first inclination; a fourth part 45 shaped like a truncated cone presents a basis integral with the upper side of the third part 44 and has a second lateral surface with a second inclination steeper than the first inclination. A rod 29 integrally connects the reduction gear 35 of the step motor 31 to the shutter 36.

The area of the passage section for the gaseous fuel defined by the internal edge of the passage opening 41 and the external surface of the shutter 36 varies unevenly according to which part of the shutter 36 defines said area. Each modulating device feeds one combustion chamber or, in alternative, two chambers.

The method for controlling the device allows to obtain an initial position of the shutter different for each device in order to equilibrate the variations in the flow rate due to the different dimensions of each modulating device and deterioration condition owing to wear or carbon deposits. The method is obtained by using fuel flow rate and temperature sensors connected to the central control unit 5.

The central control unit 5 processes the information of said sensors to obtain control signals to be sent to each modulating device; the signals enable the step motors 31 to move the shutters 24, 25 of the modulating devices so that each modulating device can supply a correct fuel flow rate at a pre-selected reference revolution speed (for example at idling), independently of the engine age.

The sensors used for performing this method are: a pressure sensor inserted in the intake manifold 6, said sensor measuring the flow rate of the air sucked by the engine; sensors for measuring the fuel crossing the modulating devices; fuel temperature sensors.

The fuel flow rate at the outlet of each modulating device is measured by the resistor 34.

This method for controlling the device is based on the principle according to which the resistor 34 dissipates the heat emitted for Joule effect ($Q = K \times V \times I$) into the environment, therefore the temperature of equilibrium of the resistor 34 is a function of the environmental temperature, characteristic of radiation of the resistor 34 and convective movements of the fuel; (a gas does not exchange heat via conduction).

Since the temperature excursions are low, the radiation may be considered a constant; therefore, when the resistor 34 is surrounded by the gaseous fuel, its temperature of equilibrium decreases with the increasing speed of the gaseous fuel (that is its flow rate) considering its specific heat as a constant.

Advantageously, the used resistors are NTC resistors; these resistors present a characteristic of resistance changing with temperature; therefore, it is possible to obtain a relationship between the gaseous fuel speed (that is the flow rate) and the temperature of equilibrium of each resistor 34; the flow rate value results immediately by knowing the temperature of the gaseous fuel at the inlet of the modulating device, the temperature of equilibrium and the area of passage at the outlet of the device, in short the ohmic value of said resistor 34.

This information may be obtained by means of resistors of different types, for example PTC resistors. The choice of the type of resistor depends on the characteristics of linearity and thermal response which can be obtained by using components available in the market.

An absolute measure of the gaseous fuel flow rate is not necessary; it is enough to obtain a relative measure by independently manoeuvring the shutter of each modulating device so that each resistor can present the same resistance value confirming the exact correspondence of the delivery condition of all modulating devices.

During installation, a self-tuning of the devices is operated by maintaining the engine idling for a few seconds and storing the offset values of each modulating device; successively, for each ignition of the engine the central control unit 5 automatically repeats the tuning by rewriting the new offset values of each modulating device. During use, the modulating devices work synchronously according to various requirements.

During the tuning of the feeding equipment, a balancing of the modulating devices is needed by overlooking the tolerances and differences in the resistance of the sensors. This method for controlling the modulating devices presents self-regulating features and offers the following advantages:

1- It cancels the effects of mechanical wear of the modulating devices;
2- It allows the adjustment to a change of section due to carbon deposits and fuel waste;
3- It eliminates the consequences of the fuel pressure changes, since the gaseous fuel speed and flow rate vary with the varying of the pressure;

4- It makes the flow rate independent of the fuel temperature which influences the flow rate;

5- It enables to obtain a correct proportionality between the shutter positions of the modulating devices and the signals coming from the electronic control unit mounted in the vehicle which controls the fuel liquid injectors when the engine is fed by this fuel.

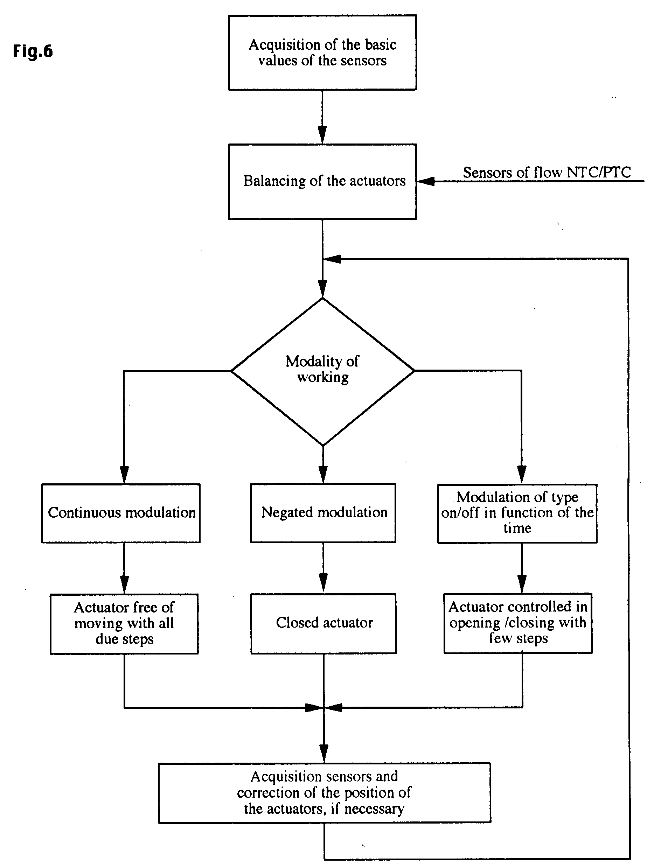

The method is shown in Fig.6; it consists in the acquisition and setting of the basic values of the flow rate and temperature sensors connected to the central control unit 5; in balancing the modulating devices by overlooking the tolerances and differences in the resistance of the sensors. According to the working phases of the engine 1, the modulation can be continuous, negated or on/off in function of the time.

In the first case (high and full load) the modulating devices are free to move throughout the range allowed by the electromechanical apparatus (step motor 31); in the second case the modulating devices are closed (engine not in function or in cut-off phase for deceleration); in the third case (idling and low load phases) the modulating devices are on/off in a narrow range of the step motor 31.

Finally, the position of the shutters 24, 25 may be corrected, if required, considering both the gaseous fuel flow rate values measured by the resistor 34 and the air flow rate measured by the pressure sensors inserted in the intake manifold 6 togheter with the fuel and the air temperature sensors.

## Claims

1. Modulating device for feeding internal combustion engines with l.p.g. or methane comprising a hollow box (15,37), the internal part of which is divided into at least one inlet cavity (18,19) and one outlet cavity (20); the hollow box (15,37) presenting at least one inlet (16,17) connecting the inlet cavity (18,19) to a pressure reducer (2) and one outlet (21) which connects the outlet cavity (20) to at least one intake pipe of the engine (1), characterised by the fact that the device (4) presents a shutter (24,25,36) capable of changing the flow rate of the fuel crossing a passage opening (22,23,41) located between the inlet cavity (18,19) and the outlet cavity (20); the shutter (24,25,36) being connected to an electromechanical apparatus (31,35) by means of connecting elements (29); in order to control the fuel flow rate through the passage opening (22,23,41) according to the operating phases of the engine (1), a central control unit (5) is provided acting on the electromechanical apparatus (31,35) for transmitting an oscillating movement to the shutter (24,25,36), the oscillating movement having an amplitude and a frequency depending on the engine operating condition measured by sensors (11,34) capable of sensing said operating condition.

2. Device as in claim 1, wherein the shutter (25,36) controlling the passage opening (41) consists of four superimposed parts: a first lower part (42) shaped like a plate closes the passage opening (41) between both cavities (38,39); a second cylindrical part (43) has a shorter diameter than the diameter of the passage opening (41); a third part (44) shaped like a truncated cone presents a basis jointed to the upper side of the second cylindrical part (43), said third part (44) having a first lateral surface with a first inclination; a fourth part (45) shaped like a truncated cone, the basis of which is jointed to the upper side of the truncated cone third part (44), said fourth part (45) having a second lateral surface with a second inclination steeper than the first inclination of the third part (44); the area of the passage section for the gaseous fuel defined by the internal edge of the passage opening (41) together with the external surface of the shutter (36) varies unevenly according to which part of the shutter (36) defines said area.

3. Device as in claim 1, wherein the shutter (24,25) consists of two separate parts; a first part (24) controling a first passage opening (23) and a second part (25) controling a second passage opening (22); the first passage opening (23) connects a first cavity (19) to an outlet cavity (20), while the second passage opening (22) connects a second cavity (18) to the outlet cavity (20); the first part (24) being integral with a first rod (30) and the second part (25) with a second rod (29); a first spring (33) stresses the first part (24) to allow its return to the closing position of the first passage opening (23) when the second part (25) moves to the closing position of the second passage opening (22), while a second spring (32) rests against the second part (25).

4. Device as in claim 3, wherein the second part (25) of the, shutter (24,25) is divided into three zones; a first zone is shaped like a plate (26), a second zone (27) is cylindrical, while a third zone (28) is shaped like a truncated cone; the height ($\partial$) of the first cylindrical zone (26) is chosen so that, during the idling and low load phases of the engine (1), the second passage opening (22) may be kept closed by the second part (25) of the shutter (24,25).

5. Device as in claim 1, wherein a sensor (34) of the fuel flow rate is located at the outlet (21) of the outlet cavity (20,39).

6. Device as in claim 1, wherein the electromechanical apparatus (31,35) consists of a step motor (31) connected to the shutter (24,25,36) by means of a mechanism of motion transmission (35); a connecting rod (29) jointing the mechanism of motion transmission (35) with the shutter (24,25,36).

7. Device as in claim 1, wherein the first rod (30), the plate (24) and the spring (33) form an elastic system elastically reacting to the alternating stresses of the rod (29); therefore, the movements of the elastic system have the same frequency and proportional amplitude as the movements of the rod (29) and are phased with the same movements.

8. Method for controlling the device according to any of the previous claims, <u>characterised</u> by the fact that it consists in the acquisition and setting of the basic values of the flow rate and temperature sensors connected to the central control unit (5); in balancing the modulating devices (4) by overlooking the tolerances and differences in the resistance of the sensors (34); in keeping the modulating devices (4) free to move throughout the range allowed by the electromechanical apparatus (31); in correcting the position of the shutters (24,25) according to the values of both the gaseous fuel flow rate measured by the sensors (34) and the air flow rate measured by the pressure sensors located in the intake manifold (6) and by the fuel and air temperature sensors.

9. Method for controlling the device according to any of the previous claims, wherein the closing phase of the modulating devices (4) is further provided for the inoperative condition or the cut-off during deceleration of the engine (1).

10. Method for controlling the device according to any of the previous claims, wherein a phase is further provided during which the modulating devices (4) are alternately open or closed in a narrow range of the electromechanical apparatus (31).

**Fig.1**

Fig.2

**Fig.3**

**Fig.4**

**Fig.5**

F1
F2

31
35
37
38
32
16
41
40
39

29
36
34
21

5

42 43 44 45

**Fig.6**

```
                    ┌─────────────────────┐
                    │  Acquisition of the basic │
                    │   values of the sensors   │
                    └─────────────────────┘
                               │
                               ▼
                    ┌─────────────────────┐
                    │                     │◄──── Sensors of flow NTC/PTC
                    │ Balancing of the actuators │
                    │                     │
                    └─────────────────────┘
                               │
                               ▼
                          ◇ Modality of ◇
                          ◇  working   ◇
```

| Continuous modulation | Negated modulation | Modulation of type on/off in function of the time |
|---|---|---|

| Actuator free of moving with all due steps | Closed actuator | Actuator controlled in opening /closing with few steps |
|---|---|---|

Acquisition sensors and
correction of the position of
the actuators, if necessary

**European Patent Office**

**EUROPEAN SEARCH REPORT**

Application Number

EP 97 11 1483

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 398 724 A (VARS CURTIS C ET AL)<br>* the whole document *<br>--- | 1,8-10 | F02B43/00<br>F02M21/02 |
| A | US 5 390 651 A (NUSSBAUM STEPHEN H ET AL)<br>* the whole document *<br>--- | 1,8-10 | |
| A | WO 92 11448 A (NECAM BV ;KOLTEC BV (NL))<br>* the whole document *<br>--- | 1,8-10 | |
| A | US 4 505 249 A (YOUNG COLIN G)<br>* the whole document *<br>--- | 1,8-10 | |
| A | WO 96 39579 A (TNO ;VOOGD ADRIANUS DE (NL))<br>* abstract; figure 1 *<br>----- | 1,8-10 | |

TECHNICAL FIELDS
SEARCHED (Int.Cl.6)

F02B
F02M
F02D

The present search report has been drawn up for all claims

| Place of search | Date of completion of the search | Examiner |
|---|---|---|
| THE HAGUE | 5 November 1997 | Wassenaar, G |

EPO FORM 1503 03.82 (P04C01)